# EUROPEAN PATENT APPLICATION

(11) **EP 2 747 438 A2**
(43) Date of publication of application: **25.06.2014**
(21) Application number: 13192158.7
(22) Date of filing: 08.11.2013
(51) Int. Cl.: H04N 21/258, H04N 21/262, H04N 21/482

(54) **Live preview method and system via electronic program guide**

(30) Priority: 18.12.2012 TR 201214867
(71) Applicant: KREA ICERIK HIZMETLERI VE PRODUKSIYON ANONIM SIRKETI, Istanbul (TR)
(72) Inventor: Kasif Alkanat, Erkan, 34353 STANBUL (TR)
(74) Representative: Iskender, Ibrahim

(57) **Abstract**

The invention relates to the possibility of a live preview, within which the users can get detailed information for the broadcast streams of their interest that are on the EPG (Electronic Program Guide).

## Description

### Technical Field

The invention relates to providing a live preview for the broadcasts that can be watched through a special subscription in EPG (Electronic Program Guide) and/or attract the attention of the users among from free public programs.

### State of the Art

Users can get detailed information about the daily and/or weekly broadcast streams, programs on the air and in the future thanks to the electronic program guides by accessing the television and radio programs in digital environments.

As the digital broadcasting is in a quick development nowadays and mobile devices (smartphones, laptops, tablet computers, pocket computers etc.) are widely preferred, the program guides that are mostly seen in the printed media (magazines, newspapers etc.) are being transferred to digital media in the course of time. Thanks to the EPG applications in digital environments, the users can make decisions about the broadcasts they will watch among all the weekly and daily programs, get detailed information about the broadcasts, tag the ones that attracts their attentions among from the listed broadcasts and follow them without missing the air time or can watch the broadcasts later by issuing a command to set-top boxes with recording feature for the ones they cannot watch.

There exists generally detailed information like daily or weekly air times of the programs, air durations, air summaries, fragments, various images (picture, poster) etc. in the electronic program guide. By means of the transfer of program guides to digital environment, the television channels try to attract the attention of users by adding the fragments of the contents like TV series, film etc., images regarding the broadcast that are in the broadcast stream to the electronic program guides.

Within the background art, there are various methods and technologies that are developed for making the users use the digital environment more for digital broadcasting and advance the appreciation to higher levels.

In the patent document of the United States with the number US20090064226, an interactive program guide inference is disclosed that comprises a zone where broadcasting information, air time of the selected program are shown in detail and a two-dimensional viewing zone. By means of an analogue clock that is to be found in the viewing zone of the selected program, the momentary time and program viewing period are expressed, yet no infrastructure of live preview for the broadcasts is disclosed.

In the patent document of the United States with the number US20020166122, it is disclosed that the real time display belonging to the broadcast of interest are presented to the users as photos in the viewing screen that is on the electronic program guide. The photos are updated at certain interval aiming that the user get informed about the broadcast, but update of the photos at certain times is not enough for the users to get an idea about the broadcast.

### Brief Description of the Invention

The present invention is developed by being inspired from existing situations and aims to solve the above mentioned drawbacks.

The purpose of the invention is to provide a service that can help users in deciding to watch or not to watch the broadcast of their interest while checking through the broadcast streams in the electronic program guides.

The purpose of the invention is to provide that users can watch the broadcasts that are watched via special subscriptions for a certain period of time on the electronic program guide even though they do not own a subscription; thus, users are encouraged to buy the corresponding broadcast and membership package that includes it by advertising the broadcasts.

Another purpose of the invention is to provide that viewers can get live previews for broadcasts without being limited to the fragments thinking that the broadcasts of interest are films or TV series. Another purpose of the invention is to avoid the waste of time thanks to the live preview for the case that users have already watched the broadcasts of their interest but do not remember.

Another purpose of the invention is to provide that the users can see which program is on which channel without switching the channel on a single screen thanks to the fact that the live previews of all the programs that are broadcasted at the very moment are given on the electronic program guide.

Another purpose of the invention is to display suitable broadcasts for the fields of interests of the users by examining the actions of users on the electronic program guide. It is like displaying TV series channels for the ones who follow them, and sport broadcasts for the ones who are interested in sports.

Another purpose of the invention is to convey the sounds of the preview together with the image of the live preview of the program that is being actively viewed through the electronic program guide.

All the structural and characteristic features and all the advantages of the present invention will be understood more clearly from the following figures and the detailed description written by referring to said figures and therefore, the evaluation needs to be done by taking said figures and detailed description into consideration.

### Figures for a Better Understanding of the Invention

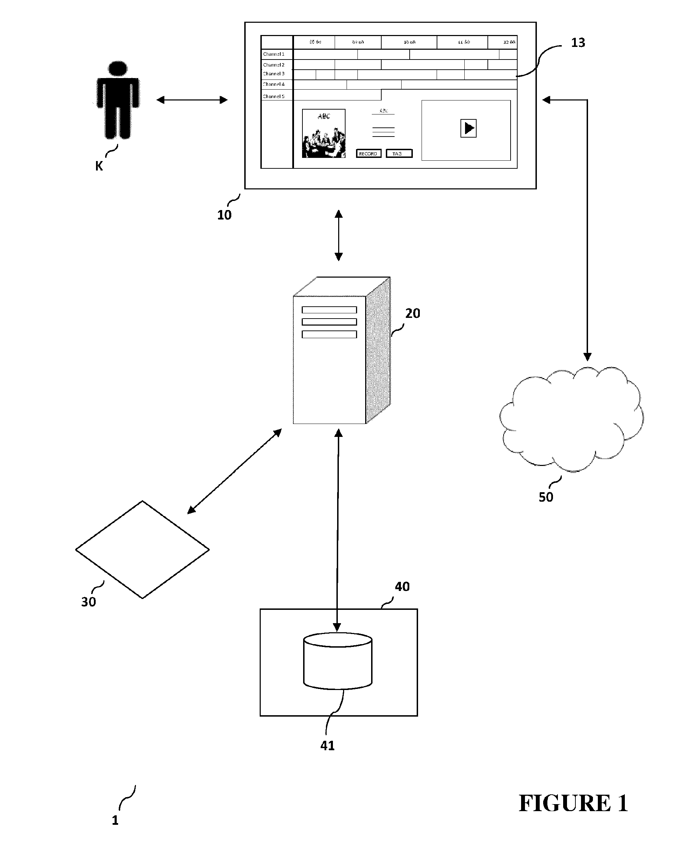

**Figure 1** is the schematic block diagram of the system that provides live preview via electronic program guide;

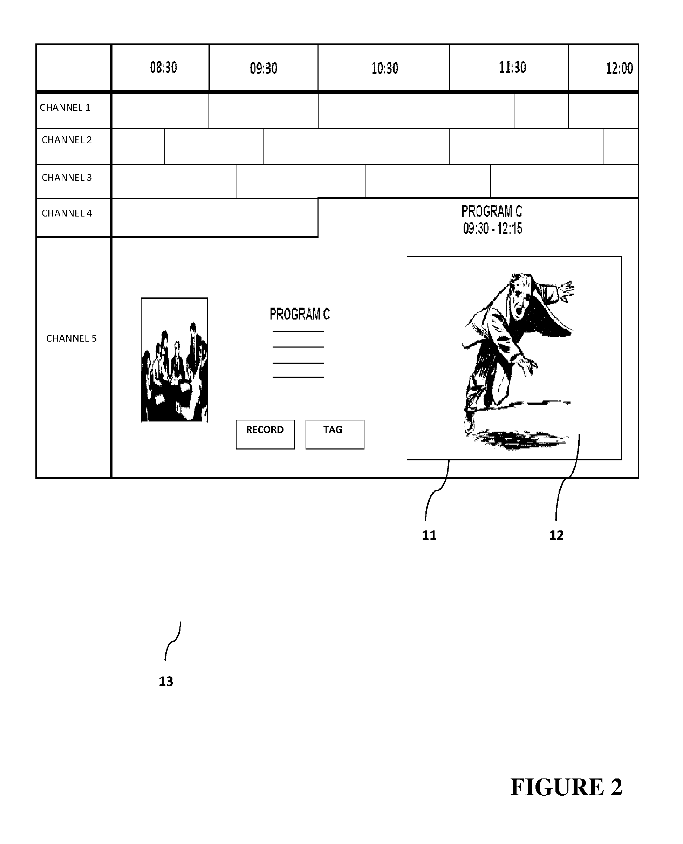

**Figure 2** is the electronic program guide that provides live preview for a single broadcast;

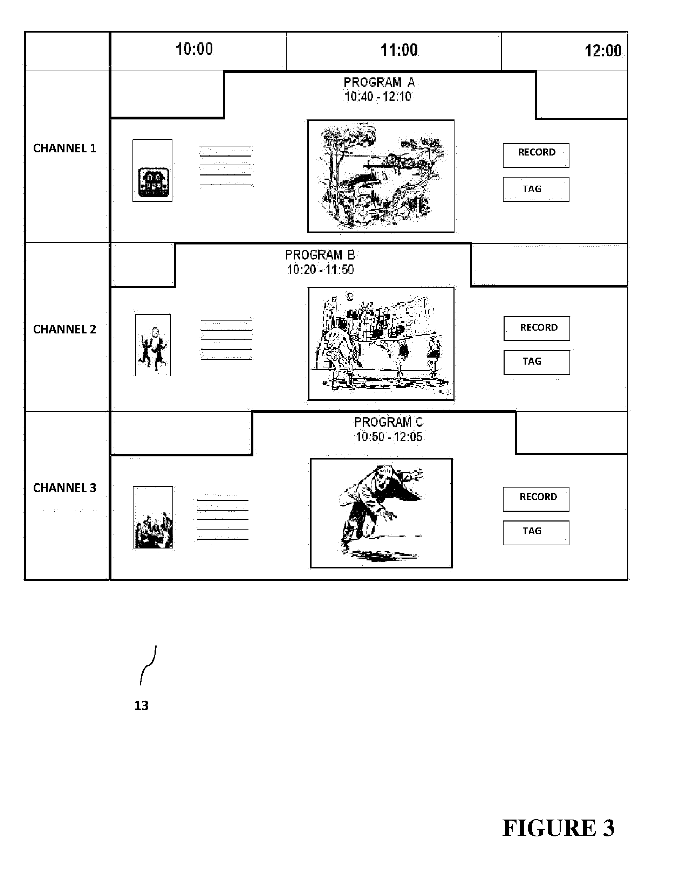

**Figure 3** is the electronic program guide that provides live preview for multiple broadcasts;

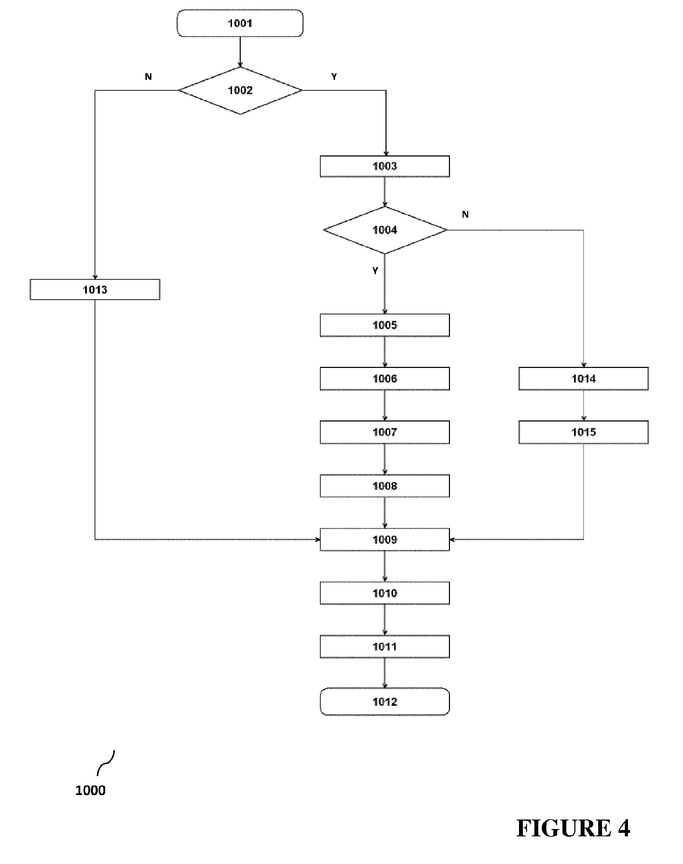

**Figure 4** is the flow diagram of the method that provides live preview via electronic program guide.

The parts in the figures are numbered and the corresponding parts of these numbers are given below.

### Description of the References

1. Live Preview System
10. Client
11. Player
12. Video contents
13. Electronic Program Guide (EPG)
20. Web Server
30. Broadcasting Information System (DBS)
40. Content Management System (CMS)
41. Content Management System Database (CMS Database)
50. Content Delivery Network (CDN)
1000. Live Preview Method
1001. Starting of the electronic program guide by the user through a client
1002. Querying whether the user has logged in or not between the client and network server
1003. Sending of the user information to the broadcasting information system
1004. Querying whether the user (U) is a subscriber or not in the broadcasting information system
1005. Sending the list and entitlements of the broadcasts that can be watched by the user according to the subscription package information by the broadcasting information system to the network server
1006. Sending of the subscription package information by the network server to the content management system
1007. Sending of the broadcast stream information from the content management system database to network server
1008. Creation of the personal EPG according to the broadcast stream information by the network server where a live preview can be done
1009. Sending of the EPG and live preview links to the client by the network server
1010. Encryption of the live preview links and making them personal by the video player in the client
1011. Getting in contact with the content delivery network for the video contents that can be reached via the encrypted links
1012. Providing a live preview in a way that the video contents in the content delivery network are played by the video player
1013. Creation of the EPG that comprises public broadcasts by the network server
1014. Determination of whether to display a live preview from the broadcast that can be watched via a private subscription and/or from which broadcasts a live preview can be performed according to different marketing strategies
1015. Creation of the EPG that comprises the broadcasts that are determined according to different marketing strategies by the network server

U: User
DBS: (Broadcasting Information System)
CMS: (Content Management System)
CDN: (Content Delivery Network)
EPG: (Electronic Program Guide)

### Detailed Description of the Invention

The live preview system (1), which provides a live preview for the program of interest among from the broadcast streams constituting the electronic program guide (13), that comprises,
- at least one client (10) that receives service from the network server (20) and is called as user (U) computer,
- at least one video player (11) that provides the play of the video contents (12) by the applications that are run via the client (10),
- at least one video content (12) that is displayed as live preview in the electronic program guide (13),
- at least one electronic program guide (13) that informs about the daily and/or weekly broadcast streams of the television programs,
- at least one network server (20) that regulates the broadcast stream contents to constitute the electronic program guide (13) in accordance with the entitlements of the users (U) and sends it to the client (10),
- at least one broadcasting information system (30) where a lot of information like the subscription package of the user (U), content of the package, duration of subscription and the specifications of the set-top box offered to the user (U) are saved and kept when the user (U) subscribes to a broadcasting package,
- at least one content management system (40) that sends the broadcast stream content constituting the electronic program guide (13) to network server (20),
- at least one content management system database (41) comprising therein detailed information such as start, end times and duration of the programs,
- at least one content delivery network (50) within which the video contents (12) to be displayed on the electronic program guide (13) exist.

Within the system (1) according to the invention, the user (U) starts an application through a client (10) called as user computer for being able to view the electronic program guide (13). Said client (10) can be a smartphone, laptop computer, desktop computer, tablet computer or pocket computer. After the application, where the electronic program guide (13) is to be displayed, is started by the client (10), a query between the client (10) and network server (20) is carried out whether the user has signed in for the possibility that the network server (20) can recognize the user (U) and check user (U) information.

If the user (U) enters membership information, the information will be sent to broadcasting information system (30). Whether the user (U) is subscribed to the digital broadcasting is checked in the broadcasting information system (30). If the user (U) did not enter the membership information, no check is done in the broadcasting information system (30) and the list of the public broadcast is sent to network server (20).

If the user (U) has a subscription for digital broadcasts, the list and entitlements of the broadcasts that the user (U) can watch in accordance with the membership package is sent to network server (20). If the user (U) is not subscribed to digital broadcasts, it is decided whether to display a live preview from the broadcast that can be watched via a private subscription within electronic program guide (13) and/or from which broadcasts a live preview can be performed according to different marketing strategies, and the list and entitlements of these broadcast are sent to network server (20).

In order to constitute the electronic program guide (13), the network server (20) sends the information that it receives from the broadcasting information system (30) to the content management system (40) with a view to receiving necessary broadcast stream content. After the content management system (40) sends the broadcast stream that is in the database (41) to the network server (20), there exist various methods according to different marketing strategies regarding the displaying of the broadcast streams in the electronic program guide (13).
The network server (20) filters the incoming broadcast streams according to the subscription package of the users (U) or arranges all the contents in a way that can be publicly watched by anyone. The network server (20) adds live preview links to the electronic program guide (13), which it creates for personal use, to the client (10). Live preview links are the ones that show where the video contents (12) are and the video contents (12) can be reached through these links. The video player (11) in the application that is run in the client (10) encrypts and makes the live preview links personal for security purposes. By means of this encryption, the live preview links can only be run by the client (10) and when they are tried to be copied to another computer, the links do not function and preview is not possible. For security reasons, a parameter is added to live preview links and it is provided that the links are usable for t duration of time.

The video contents (12) that reached via only encrypted links and provide live preview over the electronic program guide (13) can be watched by using the adaptable nonstop stream technology. Nonstop streaming is a technology that provides the users (U) display the all or a larger part of the contents instantly without the need of downloading them. The adjustment by the users (U) of the video streaming quality according to the connection speeds of the moment instead of the standard internet connections speed is called as nonstop adaptive streaming.

The video contents (12) that provide live preview by using the adaptive nonstop streaming technology are in the content delivery network (50). The client (10) gets in contact with the content delivery network (50) in order to reach these video contents (12) and the video player (11) plays the video contents (12) that are in the content delivery network (50), so the live preview process over the electronic program guide (13) by the users (U) takes place.

A method (1000) according to the invention, which is used creating live previews for the relevant broadcasts among from the broadcast streams that constitute the electronic program guide (13) in the live preview system (1), that comprises,
- starting of the electronic program guide (13) by the user (U) on a client (10) (1001),
- querying whether the user (U) has logged in between the client (10) and network server (20) (1002),
- sending of the user (U) information to the broadcasting information system (30) (1003),
- querying whether the user (U) is subscribed to digital broadcasts in broadcasting information system (30) (1004),
- sending the list and entitlements of the broadcasts that can be watched by the user (U) according to the subscription package information by the broadcasting information system (30) to the network server (10) (1005),
- sending of the subscription package information by the network server (20) to the content management system (40) (1006),
- sending of the broadcast stream information from the content management system database (41) to network server (20) (1007),
- creation of the personal electronic program guide (13) according to the broadcast stream information by the network server (20) where a live preview can be done (1008),
- sending of the live preview links to the client (10) through the electronic program guide (13) created by the network server (20) (1009),
- encryption of the live preview links and making them personal by the video player (11) (1010),
- getting in contact with the content delivery network (50) for the video contents (12) that can be reached via the encrypted links (1011),
- providing a live preview in a way that the video contents (12) in the content delivery network (50) are played by the video player (11) (1012). (Figure-4)

Within the scope of these basic concepts, it is possible that various applications of the live preview system (1) and method that provides the live preview for the relevant broadcast among from the publication streams constituting the electronic program guide (13) according to the invention can be developed, yet the invention cannot be limited to the examples explained herein, but it is mainly as in the claims below.

## Claims

1. A method (1000) for creating live previews for the relevant broadcast among from the broadcast streams that constitute the electronic program guide (13) in the live preview system (1), **characterized in that** comprising the steps of
- starting of the electronic program guide (13) by the user (U) on a client (10) (1001),
- querying whether the user (U) has logged in between the client (10) and network server (20) (1002),
- sending of the user (U) information to the broadcasting information system (30) (1003),
- querying whether the user (U) is subscribed to digital broadcasts in broadcasting information system (30) (1004),
- sending the list and entitlements of the broadcasts that can be watched by the user (U) according to the subscription package information by the broadcasting information system (30) to the network server (20) (1005),
- sending of the subscription package information by the network server (20) to the content management system (40) (1006),
- sending of the broadcast stream information from the content management system database (41) to network server (20) (1007),
- creation of the personal electronic program guide (13) according to the broadcast stream information by the network server (20) where a live preview can be done (1008),
- sending of the live preview links to the client (10) through the electronic program guide (13) created by the network server (20) (1009),
- encryption of the live preview links and making them personal by the video player (11) (1010),
- getting in contact with the content delivery network (50) for the video contents (12) that can be reached via the encrypted links (1011),
- providing a live preview in a way that the video contents (12) in the content delivery network (50) are played by the video player (11) (1012). (Figure-4)

2. Process step according to Claim 1, **characterized in that**; the video contents (12) are broadcasted via adaptive nonstop streaming technology at the stage when the live preview is provided (1012) in a way the video contents (12), which are in the content delivery network (50), are played by the video player (11).

3. Process step according to Claim 1, **characterized in that**; an electronic program guide (13) is created (1013), which comprises the public broadcasts, by the network server (20), if the user (U) has not logged in at the stage of querying whether the user (U) has logged in between the client (10) and network server (20) (1002).

4. Process step according to Claim 1, **characterized in that**; it is determined whether to display a live preview from the broadcast that can be watched via a private subscription and/or from which broadcasts a live preview can be performed according to different marketing strategies (1014) at the stage of querying whether the user (U) is subscribed to digital broadcast (1004) in the broadcasting information system (30) and in the case when the user (U) is not subscribed to digital broadcasting.

5. Process step according to Claim 1, **characterized in that**; an electronic program guide (13), which comprises the broadcasts determined by different marketing strategies, is created (1015) by the network server (20), if the user (U) is not subscribed to digital broadcasts at the stage of querying whether the user (U) is subscribed to digital broadcasts in the broadcasting information system (30) (1004).

6. Process step according to Claim 1, **characterized in that**; the links are encrypted and made private by means of the parameters to be added to the links at the stage of sending the electronic program guide (13) and live preview links, which are created by the network server (20), to the client (1009).

7. Process step according to Claim 1, **characterized in that**; the links are usable for a t time period by means of the parameters to be added to the links at the stage of encrypting and making the live preview links personal (1010) by the video player (11).

8. The electronic program guide (13) that informs about the daily and/or weekly broadcast stream of the television programs according to Claim 1, **characterized in that**; there is at least one video player (11) to create live preview.

9. The electronic program guide (13) that informs about the daily and/or weekly broadcast stream of the television programs according to Claim 1, **characterized in that**; the sounds of the broadcast is provided along with the live preview images of the program that is actively viewed by the user (U).

10. The client (10) that receives service from the network server (20) and is called as user computer according to Claim 1, **characterized in that**; the said client (20) is a smartphone, laptop computer, desktop computer, tablet computer, pocket computer or an application.

11. The live preview system (1), which provides a live preview for the program of interest among the broadcast streams constituting the electronic program guide (13), **characterized in that** comprising;
- at least one client (10) that receives service from the network server (20) and is called as user computer,
- at least one video player (11) that provides the play of the video contents (12) of the applications that are run via the client (10),
- at least one video content (12) that is displayed as live preview in the electronic program guide (13),
- at least one electronic program guide (13) that informs about the daily and/or weekly broadcast streams of the television programs,
- at least one network server (20) that regulates the broadcast stream contents to constitute the electronic program guide (13) in accordance with the entitlements of the users (U) and sends it to the client (10),
- at least one broadcasting information system (30) where a lot of information like the subscription package of the user (U), content of the package, duration of subscription and the specifications of the set-top box offered to the user (U) are saved and kept when the user (U) subscribes to a broadcasting package,
- at least one content management system (40) that sends the broadcast stream constituting the electronic program guide (13) to network server (20),
- at least one content management system database (41) comprising therein detailed information such as start, end times and duration of the programs,
- at least one content delivery network (50) within which the video contents (12) to be displayed on the electronic program guide (13) exist.
